# EUROPÄISCHE PATENTSCHRIFT

(11) **EP 1 907 246 B1**
(45) Veröffentlichungstag und Bekanntmachung des Hinweises auf die Patenterteilung: **09.09.2009**
(21) Anmeldenummer: 06776310.2
(22) Anmeldetag: 20.07.2006
(51) Int. Cl.: B60S 9/02

(54) **STÜTZWINDE**
SEMI-TRAILER LANDING GEAR
BEQUILLE

(30) Priorität: 23.07.2005 DE 102005034553
(43) Veröffentlichungstag der Anmeldung: 09.04.2008
(73) Patentinhaber: Jost-Werke GmbH & Co. KG, 63263 Neu-Isenburg (DE)
(72) Erfinder: MÜLLER, Gerald, 63179 Obertshausen (DE); SEIDEL, Günter, 64560 Riedstadt (DE); ALGÜERA, José, 63739 Aschaffenburg (DE)
(74) Vertreter: Fuchs
(86) Internationale Anmeldenummer: PCT/EP2006/007144
(87) Internationale Veröffentlichungsnummer: WO 2007/012425

(56) Entgegenhaltungen:
- EP-A2- 0 380 941
- US-A1- 2001 020 781

## Beschreibung

Die Erfindung betrifft eine Stützwinde, insbesondere zum Abstützen von Aufliegern, mit einem in seiner Höhe teleskopartig verfahrbaren, eine Außenhülse und eine Innenhülse aufweisenden Abstützelement, wobei die Außenhülse einen Befestigungsflansch zum Anbringen an ein Fahrzeug umfasst.

Derartige Stützwinden werden insbesondere zum Abstützen von Aufliegern eines Sattelzuges verwendet. Diese Stützwinden werden aus Vierkantrohren hergestellt, die ineinander gesteckt und gegeneinander verfahren werden können, wie beispielsweise aus der EP 1 104 369 B1 bekannt ist.

Zur Reduzierung des Gewichtes und der Herstellungskosten wird in der EP 0 972 688 A2 eine Hubeinrichtung mit Schaftrohr und Stützrohr vorgeschlagen, die über eine Montageeinrichtung an einem Fahrzeugchassis befestigt ist. Dabei soll die Montageeinrichtung als Montageplatte ausgebildet sein und ein offenes U-förmiges Profilelement verschließen, so dass ein hohles Schaftrohr entsteht. Hierzu wird die Montageplatte mit dem U-Profil über Längsschweißnähte auf seiner ganzen Länge verschweißt. Der wesentliche Nachteil dieser bekannten Hubeinrichtung besteht in der aufwendigen Fertigungstechnik, da das U-förmige Profilelement sehr passgenau mit der Montageplatte verschweißt werden muss. Darüber hinaus besteht die Gefahr, dass es bei innen liegenden Schweißnähten zu einem unterschiedlichen lichten Querschnitt kommt, wodurch es zu Behinderungen beim Ein- und Ausfahren des Stützrohres kommen kann.

Einen anderen Stand der Technik bildet die EP 0 380 941 A2. Bei dieser Stützvorrichtung ist eine Außenhülse einteilig mit ihrer Befestigungsplatte zum Anbringen der Stützvorrichtung an ein Fahrzeug im Strangpressverfahren hergestellt. Aufgrund des Rohlings in Blockform ist dieses Verfahren auf Leichtmetall, insbesondere Aluminium, beschränkt. Derartige Stützvorrichtungen haben sich jedoch auf dem Markt nicht durchgesetzt, da sie aufgrund des hochwertigen Materials teuer sind und sich aufgrund der geringen Materialfestigkeit als anfällig im betrieblichen Einsatz erwiesen haben.

Demzufolge lag der Erfindung die Aufgabe zugrunde, eine Stützwinde zu entwickeln, die einerseits kostengünstig herzustellen ist und andererseits auch hohen Belastungen standhält.

Die Aufgabe wird erfindungsgemäß mit einer Stützwinde gelöst, bei der die Außenhülse und der Befestigungsflansch einstückig mittels Rollbiegen aus einem Flachstahl gefertigt sind. In den meisten Fällen wird kaltumgeformt, nur in Sonderfällen, bei großen Querschnitten oder sehr kleinen Biegeradien, wird der Werkstoff erwärmt, um die zur Umformung erforderlichen Kräfte zu reduzieren. Der wesentliche Vorteil rollgebogener gegenüber stranggepresster Hülsen liegt in der annähernd freien Wahl der Legierung des plattenartigen Ausgangsmaterials. Hierbei können auch übliche Stähle Verwendung finden. Weiterhin ist es nicht notwendig, einzelne Bauteile über mehrere in der Fertigung aufwendig zu erstellende Schweißnähte zu verbinden. Durch den vergleichsweise kurzen Biegevorgang des Materials lassen sich sehr große Stückzahlen pro Zeiteinheit herstellen.

In einer bevorzugten Ausführungsform weist jede Hülse maximal eine Verbindungsschweißnaht auf. Durch diese Art der stoffschlüssigen Verbindung entsteht eine Außenhülse mit einem in sich geschlossen Hohlkörper, der über eine hohe Biegesteifigkeit verfügt. Dabei kann die Schweißnaht an einer für die Herstellung sehr günstigen Position angeordnet sein.

Es hat sich als besonders vorteilhaft herausgestellt, wenn die Verbindungsschweißnaht in axialer Richtung der Außenhülse angeordnet ist. Die Schweißnaht kann dabei mittig durch eine Seitenwand der Hülse verlaufen oder in einem Winkel zwischen zwei zueinander benachbarten Seitenwänden.

Vorzugsweise steht der Befestigungsflansch beidseitig gegenüber der Außenhülse über. In jedem Fall ist auch bei dieser Ausführungsform der Befestigungsflansch einstückiger Bestandteil der Hülse. Der Befestigungsflansch weist ein vorgegebenes Lochbild auf. Für die Montage beispielsweise an einem Fahrzeugchassis werden dann Schrauben durch die Löcher hindurch gesteckt und mit dem Fahrzeug verschraubt.

Der Befestigungsflansch der Außenhülse kann durch eine von der jeweiligen Seitenwand ca. um 90° nach außen abgekanteten Wand gebildet sein, an dessen Endabschnitt günstigerweise jeweils eine 180° Umlegung angeordnet ist. Daraus resultiert eine im Bereich des Befestigungsflansches doppelte Wandstärke mit einer besonders geringen Anfälligkeit gegen hohe Flächenpressungen. Der aus der Umlegung resultierende fahrzeugseitige Wandabschnitt sollte mittig zwischen Seitenwänden der Außenhülse auf den komplementären gegenüberliegenden Wandabschnitt treffen und ist vorteilhafterweise stumpf mit diesem verschweißt.

Vorteilhafterweise weist die Hülse im Bereich der Umlegung eine Hohlraumversiegelung auf. Durch die scharfe Umlegung kommt es auf der Außenseite zu Mikrorissen und auf der Innenseite zu einer Hohlraumbildung, in welche Feuchtigkeit eindringen kann und zu einer Rostbildung führt. Derartige Korrosionserscheinungen werden durch eine geeignete Hohlraumversiegelung in dem gesamten Bereich des Befestigungsflansches wirksam vermieden. Dieses erhöht ebenfalls erheblich die Lebenszeit der Stützwinde.

Eine besonders hohe Stabilität der Stützwinde wird erreicht, wenn zwei gegenüberliegende Seitenwände der Außenhülse einen abgewinkelten Wandabschnitt aufweisen. Vorzugsweise sind die jeweils an den Befestigungsflansch angrenzenden Seitenwände um einen Winkel von 5° bis 30° abgewinkelt. Dabei sollte die Abwinklung ausgehend von dem Befestigungsflansch nicht über die halbe Profiltiefe hinausgehen und sich in Richtung des Befestigungsflansches aufweiten.

Zum besseren Verständnis wird die Erfindung nachfolgend anhand von 3 Zeichnungsfiguren näher erläutert. Dabei zeigt die
- **Fig. 1:**: eine Draufsicht auf eine Außenhülse mit flach ausgewalzter Umlegung eines Befestigungsflansches;
- **Fig. 2:**: eine Ansicht gemäß Fig. 1 mit mäßig ausgewalzter Umlegung eines Befestigungsflansches und
- **Fig. 3:**: eine Draufsicht auf eine Außenhülse mit darin angeordneter Innenhülse.

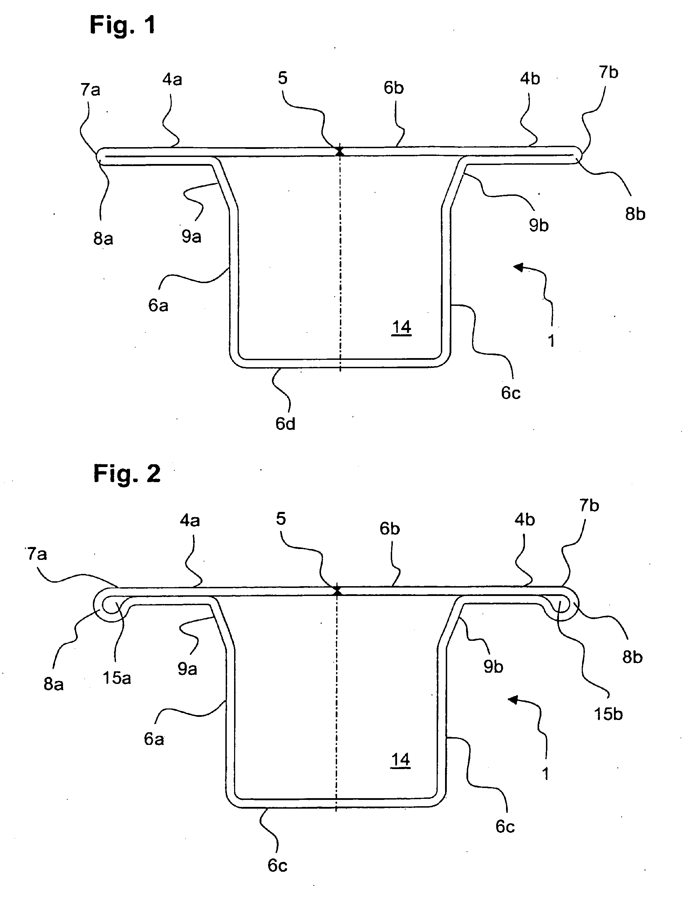

Die Figur 1 zeigt in einer Draufsicht eine erfindungsgemäße Außenhülse 1, deren Seitenwände 6a, 6b, 6c, 6d einen im Wesentlichen rechteckigen Innenraum 14 umgeben. Die Seitenwand 6b weist in ihrer Symmetrieachse eine Verbindungsschweißnaht 5 auf, welche beide Hälften der Seitenwand 6b stoffschlüssig miteinander verbindet. An der Seitenwand 6b wird die gesamte Stützwinde über die Außenhülse 1 an ein nicht gezeigtes Fahrzeug angebracht. Hierfür sind an der Seitenwand 6b beidseitig der Verbindungsschweißnaht 5 seitlich über die Seitenwände 6a, 6c hinaus ragende Befestigungsflansche 4a, 4b ausgebildet.

Die Seitenwände 6a, 6b, 6c, 6d sind aus einem ursprünglich plattenartigen Ausgangsmaterial durch Biegen ausgeformt und genen demzufolge nahtlos ineinander über. In Endabschnitten 7a, 7b der Befestigungsflansche 4a, 4b ist jeweils eine Umlegung 8a, 8b zu erkennen, an der das Material um 180° umgebogen ist. In der Ausführungsform der Figur 1 handelt es sich um eine scharfe Umlegung, die nach dem Biegevorgang nachgewalzt wurde, so dass im Bereich der Umlegung das Wandmaterial sogleich wieder aneinander aufliegt.

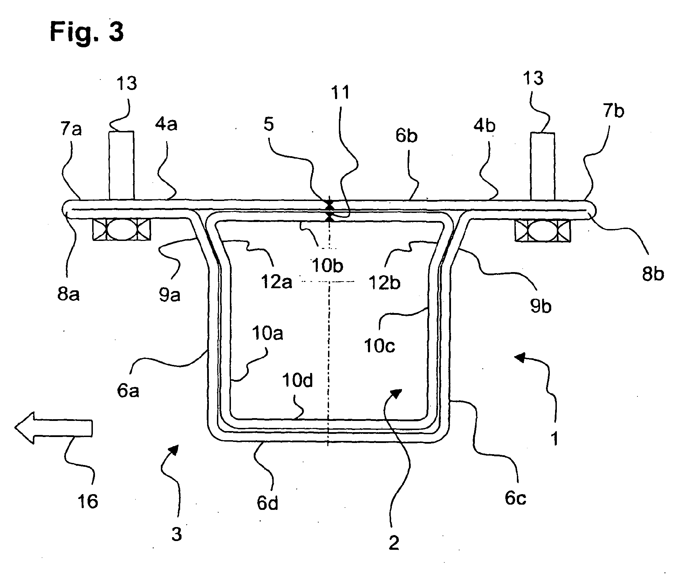

Bei der üblichen vorgesehenen Montage stehen die Seitenwände 6a, 6c rechtwinklig zur und die Seitenwände 6b, 6d in Fahrtrichtung 16 (siehe Figur 3). Zur Erhöhung der Stabilität sind die gegenüberliegenden Seitenwände 6a, 6c mit abgewinkelten Wandabschnitten 9a, 9b versehen, die in Richtung der Seitenwand 6b um ca. 20° nach außen gestellt sind. Durch diese konstruktive Maßnahme ist es möglich, das Material der Außenhülse 1 bei gleicher Stabilität dünner zu wählen. Aufgrund der beim Ankuppeln in oder entgegengesetzt zur Fahrtrichtung 16 auf den Auflieger einwirkenden Kräfte, sollten die Seitenwände 6a, 6c mit dem abgewinkelten Wandabschnitt ausgebildet sein.

Eine hinsichtlich ihrer Endabschnitte 7a, 7b alternative Ausführungsform ist in Figur 2 dargestellt. Diese Ausführungsform weist eine 180° Umlegung 8a, 8b auf, die jedoch nicht vollständig nachgewalzt wurde, so dass ein Umschlingungsraum 15a, 15b bestehen bleibt. Hieraus resultieren weniger Mikrorisse auf der Außenseite der Umlegung 8a, 8b, da das Material in diesem Bereich einer nicht so starken Dehnung wie bei der Ausführungsform gemäß Figur 1 unterliegt.

Die Figur 3 zeigt in einer Draufsicht ein Abstützelement 3 umfassend eine Außenhülse 1 und eine darin eingesteckte Innenhülse 2. Zur Befestigung an einem nicht gezeigten Fahrzeug sind in ebenfalls in der Draufsicht nicht sichtbare Bohrungen Befestigungsbolzen 13 eingesteckt. Die Befestigungsbolzen 13 ragen über die plane Fläche der Seitenwand 6b mit ihren Befestigungsflanschen 4a, 4b hinaus.

Die Innenhülse 2 wurde ebenfalls aus einem plattenartigen Ausgangsmaterial durch Rollbiegen ausgeformt und zu einem geschlossenen Hohlkörper über die Verbindungsschweißnaht 11 verbunden. Die Verbindungsschweißnaht 11 befindet sich ebenfalls in der Symmetrieachse und ist unmittelbar benachbart zu der Verbindungsschweißnaht 5 angeordnet.

Die Innenhülse 2 ist als Vierkantrohr mit zwei jeweils gleichlangen paarweise gegenüberliegenden Seitenwänden 10a, 10b, 10c, 10d ausgeformt, wobei die Seitenwände 10a, 10c komplementär zu den Seitenwänden 6a, 6c abgewinkelte Wandabschnitte 12a, 12b aufweisen. Dadurch wird einerseits auch das maximal aufnehmbare Biegemoment erhöht und andererseits eine gute axiale Führung der Innenhülse 2 gegenüber der Außenhülse 1 gewährleistet.

### Bezugszeichenliste

- 1: Außenhülse
- 2: Innenhülse
- 3: Abstützelement
- 4a, 4b: Befestigungsflansch
- 5: Verbindungsschweißnaht Außenhülse
- 6a-d: Seitenwand Außenhülse
- 7a, 7b: Endabschnitt Befestigungsflansch
- 8a, 8b: Umlegung
- 9a, 9b: abgewinkelter Wandabschnitt Außenhülse
- 10a-d: Seitenwand Innenhülse
- 11: Verbindungsschweißnaht Innenhülse
- 12a, 12b: abgewinkelter Wandabschnitt Innenhülse
- 13: Befestigungsbolzen
- 14: Innenraum
- 15a, 15b: Umschlingungsraum
- 16: Fahrtrichtung

## Patentansprüche

1. Stützwinde, insbesondere zum Abstützen von Aufliegern, mit einem in seiner Höhe teleskopartig verfahrbaren, eine Außenhülse (1) und eine Innenhülse (2) aufweisenden Abstützelement (3), wobei die Außenhülse (1) einen Befestigungsflansch (4) zum Anbringen an ein Fahrzeug umfasst, **dadurch gekennzeichnet, dass** die Außenhülse (1) und der Befestigungsflansch (4) einstückig mittels Rollbiegen aus einem Flachstahl gefertigt sind.

2. Stützwinde nach Anspruch 1, **dadurch gekennzeichnet, dass** die Außenhülse (1) maximal eine Verbindungsschweißnaht (5) aufweist.

3. Stützwinde nach Anspruch 2, **dadurch gekennzeichnet, dass** die Verbindungsschweißnaht (5) in axialer Richtung der Außenhülse (1) verläuft.

4. Stützwinde nach einem der Ansprüche 1 bis 3, **dadurch gekennzeichnet, dass** der Befestigungsflansch (4) beidseitig gegenüber der Außenhülse (1) übersteht.

5. Stützwinde nach einem der Ansprüche 1 bis 4, **dadurch gekennzeichnet, dass** der Befestigungsflansch (4) eine doppelte Wandstärke einer Seitenwand (6a-c) aufweist.

6. Stützwinde nach einem der Ansprüche 1 bis 5, **dadurch gekennzeichnet, dass** der Befestigungsflansch (4) jeweils einen Endabschnitt (7) mit einer 180° Umlegung (8) aufweist.

7. Stützwinde nach Anspruch 6, **dadurch gekennzeichnet, dass** die Außenhülse (1) im Bereich der Umlegung (8) eine Hohlraumversiegelung aufweist.

8. Stützwinde nach einem der Ansprüche 1 bis 7, **dadurch gekennzeichnet, dass** zwei gegenüberliegende Seitenwände (6a, 6c) der Außenhülse (1) jeweils einen abgewinkelten Wandabschnitt (9) aufweisen.

## Claims

1. Support jack, in particular for supporting semitrailers, with a support element (3) which can be telescopically displaced in its height and has an outer sleeve (1) and an inner sleeve (2), wherein the outer sleeve (1) comprises a fastening flange (4) for attachment to a vehicle, **characterised in that** the outer sleeve (1) and the fastening flange (4) are made in one piece by means of edge rolling from a flat steel piece.

2. Support jack according to Claim 1, **characterised in that** the outer sleeve (1) has a maximum of one connecting weld seam (5).

3. Support jack according to Claim 2, **characterised in that** the connecting weld seam (5) extends in the axial direction of the outer sleeve (1).

4. Support jack according to any one of Claims 1 to 3, **characterised in that** the fastening flange (4) protrudes on both sides with respect to the outer sleeve (1).

5. Support jack according to any one of Claims 1 to 4, **characterised in that** the wall thickness of the fastening flange (4) is double that of a side wall (6a-c).

6. Support jack according to any one of Claims 1 to 5, **characterised in that** the fastening flange (4) has a respective end section (7) with a 180° fold (8).

7. Support jack according to Claim 6, **characterised in that** the outer sleeve (1) has cavity sealing in the region of the fold (8).

8. Support jack according to any one of Claims 1 to 7, **characterised in that** two opposite side walls (6a, 6c) of the outer sleeve (1) in each case have an angled wall section (9).

## Revendications

1. Béquille, en particulier pour soutenir des semi-remorques, avec un élément de soutien (3) mobile en hauteur de façon télescopique et présentant une douille extérieure (1) et une douille intérieure (2), dans lequel la douille extérieure (1) comprend une bride de fixation (4) pour la fixation sur un véhicule, **caractérisé en ce que** la douille extérieure (1) et la bride de fixation (4) sont fabriquées d'une seule pièce par roulage en acier plat.

2. Béquille selon la revendication 1, **caractérisé en ce que** la douille extérieure (1) présente au maximum un joint soudé d'assemblage (5).

3. Béquille selon la revendication 2, **caractérisé en ce que** le joint soudé d'assemblage (5) s'étend dans la direction axiale de la douille extérieure (1).

4. Béquille selon l'une quelconque des revendications 1 à 3, **caractérisé en ce que** la bride de fixation (4) dépasse des deux côtés par rapport à la douille extérieure (1).

5. Béquille selon l'une quelconque des revendications 1 à 4, **caractérisé en ce que** la bride de fixation (4) présente une épaisseur de paroi double d'une paroi latérale (6a à c).

6. Béquille selon l'une quelconque des revendications 1 à 5, **caractérisé en ce que** la bride de fixation (4) présente respectivement une portion d'extrémité (7) avec un rebord (8) de 180°.

7. Béquille selon la revendication 6, **caractérisé en ce que** la douille extérieure (1) présente dans la zone du rebord (8) une protection de corps creux.

8. Béquille selon l'une quelconque des revendications 1 à 7, **caractérisé en ce que** deux parois latérales opposées (6a, 6c) de la douille extérieure (1) présentent respectivement une portion de paroi coudée (9).
